# EUROPÄISCHE PATENTSCHRIFT

(11) **EP 1 258 667 B1**
(45) Veröffentlichungstag und Bekanntmachung des Hinweises auf die Patenterteilung: **09.11.2005**
(21) Anmeldenummer: 02006752.6
(22) Anmeldetag: 25.03.2002
(51) Int. Cl.: F16P 3/14

(54) **Schutzeinrichtung für Maschinen, wie Abkantpressen, Schneidemaschinen, Stanzmaschinen oder dergleichen**
Protective device for machines such as bending presses, cutting machines, punching machines or the like.
Dispositif de protection pour machines telles que presses-plieuses, découpeuses, machines à éstamper ou analogues

(30) Priorität: 15.05.2001 DE 10123562
(43) Veröffentlichungstag der Anmeldung: 20.11.2002
(73) Patentinhaber: Fiessler Elektronik GmbH & Co. KG, 73734 Esslingen (DE)
(72) Erfinder: Fiessler, Lutz, Dr., 73773 Aichwald (DE)
(74) Vertreter: Vetter, Hans

(56) Entgegenhaltungen:
- EP-A- 0 146 460
- WO-A-00/67932
- DE-A- 19 717 299

## Beschreibung

Die Erfindung betrifft eine Schutzeinrichtung für Maschinen, wie Abkantpressen, Schneidemaschinen, Stanzmaschinen oder dergleichen, bei denen ein erstes Maschinenteil Arbeitsbewegungen gegen ein zweites Maschinenteil ausführt, mit wenigstens einer Lichtschranke, insbesondere Laser-Lichtschranke, deren Lichtstrahl senkrecht zur Arbeitsbewegungsrichtung verläuft und die zwischen den beiden Maschinenteilen an einem derselben so positionierbar ist, dass ihr Lichtstrahl einen Sicherheitsabstand zu diesem Maschinenteil aufweist, wobei dieser Sicherheitsabstand durch eine verstellbar an diesem einen Maschinenteil angeordnete Sicherheitseinrichtung einstellbar ist, die die wenigstens eine Lichtschranke trägt, mit einer bei Unterbrechung des Lichtstrahls die Arbeitsbewegung stoppenden Blockiereinrichtung und mit einer die Blockiereinrichtung unmittelbar vor Unterbrechung des Lichtstrahls durch das andere Maschinenteil abschaltenden Abschalteinrichtung.

Bei einer derartigen, aus der DE 19717299 A1 bekannten Schutzeinrichtung sind zwei Lichtschranken bzw. Lichtstrahlen in der Bewegungsrichtung hintereinander angeordnet und weisen zueinander den einzustellenden Sicherheitsabstand auf. Zur Einstellung desselben wird die Sicherheitseinrichtung so lange gegen dieses eine Maschinenteil, das die Sicherheitseinrichtung trägt, bewegt, bis der erste Lichtstrahl durch das Maschinenteil bzw. dessen Werkzeug unterbrochen wird. Dann ist der Sicherheitsabstand eingestellt. Diese Anordnung erfordert jedoch zwei in der Bewegungsrichtung hintereinander angeordnete Lichtschranken bzw. Lichtstrahlen, die einen nicht unerheblichen Kostenfaktor ausmachen.

Aus der Praxis ist es zwar bekannt, bei nur einer Lichtschranke ein Abstandsplättchen manuell an das eine Maschinenteil bzw. dessen Werkzeug anzulegen und die Lichtschranke so lange anzunähern, bis ihr Lichtstrahl durch dieses Abstandsplättchen unterbrochen wird, jedoch werden hierbei zur Justierung insbesondere bei sehr großen Maschinen zwei Personen benötigt, und die das Abstandsplättchen haltende Person ist einer nicht unerheblichen Gefährdung durch das Werkzeug ausgesetzt.

Eine Aufgabe der vorliegenden Erfindung besteht somit darin, eine Schutzeinrichtung der eingangs genannten Gattung zu schaffen, bei der eine zusätzliche Justierlichtschranke entfallen kann und die dennoch durch eine Bedienungsperson oder vollautomatisch hinsichtlich eines Sicherheitsabstands justierbar ist.

Diese Aufgabe wird erfindungsgemäß dadurch gelöst, dass Mittel zur Durchführung einer ersten Bewegung der Sicherheitseinrichtung bis zur Unterbrechung des Lichtstrahls durch das die Sicherheitseinrichtung tragende Maschinenteil sowie zur Durchführung einer zweiten Bewegung der Sicherheitseinrichtung in die entgegengesetzte Richtung vorgesehen sind, wobei die den Sicherheitsabstand vorgebende Wegstrecke der zweiten Bewegung durch eine elektrische Mess- und/oder Steuereinrichtung vorgebbar ist.

In vorteilhafter Weise ist erfindungsgemäß der Sicherheitsabstand als Wegstrecke der zweiten Bewegung in der Mess- und/oder Steuereinrichtung gespeichert, so dass in einfacher Weise die Sicherheitseinrichtung entsprechend dieser elektrisch gespeicherten Wegstrecke bewegt wird, um den Sicherheitsabstand vorzugeben. Eine zweite Justierlichtschranke kann vollständig entfallen, was zu einer wesentlichen Kosteneinsparung führt. Durch Vorgabe verschiedener Speicherwerte oder durch berechnete Speicherwerte kann der Sicherheitsabstand sogar in einfacher Weise variabel je nach den jeweiligen Erfordernissen eingestellt werden.

Durch die in den Unteransprüchen aufgeführten Maßnahmen sind vorteilhafte Weiterbildungen und Verbesserungen der im Anspruch 1 angegebenen Schutzeinrichtung möglich.

Zur Speicherung der den Sicherheitsabstand vorgebenden Wegstrecke besitzt die Steuereinrichtung zweckmäßigerweise einen Messwertspeicher. Zur Optimierung des Messwerts können dabei in vorteilhafter Weise Mittel zur automatischen Erfassung des Nachlaufwegs des sich bewegenden Maschinenteils nach einem Stoppsignal vorgesehen sein, wobei dann ein in Abhängigkeit dieses Nachlaufwegs stehender Wert den Sicherheitsabstand im Messwertspeicher vorgibt. Der Sicherheitsabstand kann dadurch in Abhängigkeit des jeweils verwendeten Werkzeugs, der Ausrüstung der Maschine und sonstigen Parametern, wie Alterung, Zustand der Antriebsvorrichtung und der Bremsvorrichtung und dergleichen, optimal eingestellt werden.

Zur Erfassung von Zustandsänderungen ist zweckmäßigerweise eine Vergleichseinrichtung zum Vergleich des gespeicherten Nachlaufwegs mit einem neu erfassten Nachlaufweg vorgesehen, wobei Mittel zur erneuten automatischen Einstellung des Sicherheitsabstands in Abhängigkeit des neuen Nachlaufwegs vorgesehen sind, wenn eine vorgebbare Abweichung zwischen früherem und neuem Nachlaufweg festgestellt wird. Die Mittel zur automatischen Erfassung des Nachlaufwegs während der ersten Schließbewegung der Maschinenteile können vorzugsweise nach einer Spannungsunterbrechung aktiviert werden.

Zur Erhöhung der Sicherheit können mehrere elektrische Steuerkontakte oder drahtlose Steuerelemente vorgesehen sein, die mit der sich bewegenden Sicherheitseinrichtung in Wirkverbindung stehen, wobei Mittel zur Aktivierung der Schließbewegung der Maschinenteile erst bei Erreichen eines vorgewählten Steuerkontakts oder Steuerelements vorgesehen sind. Dies bildet eine zusätzliche Sicherheitsmaßnahme, um zu verhindern, dass durch einen Fehler bei der automatischen Einstellung des Sicherheitsabstands dieser wesentlich zu gering eingestellt wird.

Zur jeweils manuell ausgelösten oder vollautomatischen Durchführung der Bewegung der Sicherheitseinrichtung bei der Justierung des Sicherheitsabstands ist in vorteilhafter Weise eine motorische Antriebsvorrichtung vorgesehen.

Zur Erhöhung der Justiergenauigkeit besitzt die elektrische Mess- und/oder Steuereinrichtung Mittel zur Auslösung der Wegstreckeneinstellung während der zweiten Bewegung erst bei Aufhebung der Unterbrechung des Lichtstrahls, wobei Mittel zur Aktivierung der Schließbewegung der Maschinenteile erst bei Erreichen eines vorgewählten Steuerkontakts oder Steuerelements vorgesehen sind.

Ein Ausführungsbeispiel der Erfindung ist in der Zeichnung dargestellt und in der nachfolgenden Beschreibung näher erläutert. Es zeigen:
- Fig. 1: eine Längsseitenansicht einer mit einer Sicherheitseinrichtung versehenen Abkantpresse und
- Fig. 2: eine Querseitenansicht der in Fig. 1 dargestellten Abkantpresse bei abgesenktem Oberwerkzeug.

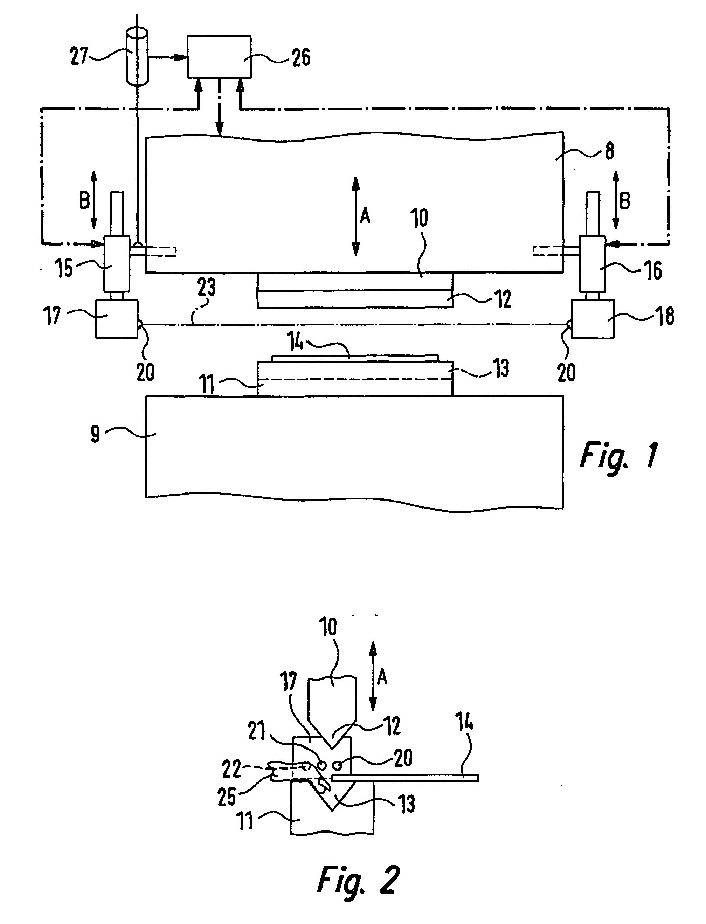

Die in den Fig. 1 und 2 dargestellte Abkantpresse besteht im Wesentlichen aus einem mit einem Oberwerkzeug 10 versehenen oberen Maschinenteil 8, das gegen ein feststehendes, mit einem Unterwerkzeug 11 versehenes unteres Maschinenteil 9 bewegbar ist. Die gegensinnige Arbeitsbewegungsrichtung A ist mit einem Doppelpfeil gekennzeichnet. Selbstverständlich kann in einer alternativen Ausführung auch das Oberwerkzeug 10 feststehend und das Unterwerkzeug 11 bewegbar ausgebildet sein. Das langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 bei der Arbeitsbewegung eingreift und dadurch das auf dem Unterwerkzeug 11 liegende, zu bearbeitende Blech 14 biegt bzw. abkantet.

Die übrigen Bereiche der an sich bekannten Abkantpresse sind zur Vereinfachung nicht dargestellt. Oberwerkzeug 10 und Unterwerkzeug 11 können selbstverständlich unterschiedliche Längen und unterschiedliche Querschnittsgestalt aufweisen und sind jeweils auswechselbar am oberen Maschinenteil 8 bzw. unteren Maschinenteil 9 befestigt.

Als Sicherheitseinrichtung sind jeweils an den einander entgegengesetzten Schmalseiten des oberen Maschinenteils 8 Führungen 15, 16 befestigt, beispielsweise angeschraubt. In diesen Führungen 15, 16 sind Halterungen 17, 18 für drei Lichtschranken 20 - 22 in einer vertikalen Einstellbewegung bewegbar, deren Richtung durch Doppelpfeile B dargestellt ist und die der Arbeitsbewegungsrichtung A entspricht. Zur motorischen Bewegung der Halterungen 17, 18 sind z.B. motorische Antriebe, wie Elektromotoren, Linearmotoren, Antriebszylinder oder dergleichen, an oder in den Führungen 15, 16 angeformt. Jede der Lichtschranken 20 - 22 besteht in an sich bekannter Weise aus einem Licht-Sender, beispielsweise Laser-Sender, und einem Licht-Empfänger, beispielsweise Laser-Empfänger, wobei die Laser-Sender an der einen Halterung 17 und die Laser-Empfänger an der_anderen Halterung 18 angeordnet sind. Es ist prinzipiell auch möglich, die Zahl der Sender durch einen Strahlteiler in mehrere Sendelichtstrahlen aufzuteilen oder aufzuweiten. Weiterhin können auch zwei parallele Lichtschranken durch parallele Laserstrahlen gebildet werden, die durch Umlenkung mittels einer Reflexionseinrichtung erzeugt werden. Bei einer solchen Ausführung sind dann beispielsweise der Sender und der Empfänger an der einen Halterung 17 und die Reflexionseinrichtung an der anderen Halterung 18 angeordnet.

Die drei Lichtschranken 20 - 22 sind alle als Schutzlichtschranken ausgebildet und erstrecken sich in einer Ebene senkrecht zur Arbeitsbewegungsrichtung A. Die Zahl dieser Lichtschranken ist selbstverständlich nicht begrenzt, wobei im einfachsten Falle auch nur eine einzige Lichtschranke, beispielsweise die Lichtschranke 20, vorgesehen sein kann.

Die Schutzwirkung der beschriebenen Schutzeinrichtung besteht darin, dass die Schließbewegung des Oberwerkzeugs 10 zum Unterwerkzeug 11 hin abrupt gestoppt wird, wenn einer der Lichtstrahlen der Lichtschranken 20 - 22 unterbrochen wird, wenn also ein Gegenstand in die Bewegungsbahn gelangt. Da derartige Abkantpressen oder ähnliche Maschinen häufig handbedient sind, besteht vor allem die Gefahr, dass die Hand oder der Arm einer Bedienungsperson in die Arbeitsbewegungsbahn gelangt und eingeklemmt oder abgetrennt werden könnte. Der Sicherheitsabstand zwischen den Laserstrahlen 23 der Lichtschranken 20 - 22, insbesondere der Lichtschranke 20, sollte daher so bemessen sein, dass zum einen beispielsweise kein Finger dazwischengeschoben werden kann, andererseits sollte dieser Sicherheitsabstand so groß sein, dass bei einer Unterbrechung des Laserstrahls 23 die Schließbewegung noch rechtzeitig vor dem Hindernis abgebremst bzw. gestoppt werden kann. Der Sicherheitsabstand wird daher beispielsweise zwischen 3 und 10 mm eingestellt.

Falls der Sicherheitsabstand beispielsweise aufgrund eines größeren Nachlaufwegs bzw. Bremswegs des Oberwerkzeugs 10 größer eingestellt werden muss, so würde bei einer Lichtschranke 20 bzw. bei in einer Ebene beabstandet vom Oberwerkzeug angeordneten Lichtschranken 20 bis 22 die Gefahr bestehen, dass ein Körperteil, beispielsweise ein Finger, zwischen das Oberwerkzeug 10 und diese Ebene geschoben werden könnte, ohne dass eine Sicherheitsabschaltung der Maschine erfolgen würde. Für einen solchen Fall werden dann Lichtschranken in zwei oder mehreren in der Arbeitsbewegungsrichtung hintereinander angeordneten Ebenen positioniert, beispielsweise in einer L- oder T-förmigen Anordnung. Die zur Einstellung des Sicherheitsabstandes verwendete Lichtschranke 20 ist dabei in der zum Oberwerkzeug 10 nächstgelegenen Ebene angeordnet.

Eine elektronische Steuereinrichtung 26 dient zur Steuerung der Bewegung des oberen Maschinenteils 8 sowie zur Steuerung der Bewegungen der Halterungen 17, 18 und damit der Lichtschranken 20 - 22 in der Einstellbewegungsrichtung B. Ein Messmodul 27 dient zur Erfassung der Bewegung des oberen Maschinenteils 8 und somit des Oberwerkzeugs 10 und ist beispielsweise als induktiver fotooptischer Wegsensor, Linearpotentiometer, Winkelschrittgeber oder dergleichen in an sich bekannter Weise ausgebildet.

Der Justiervorgang für den Sicherheitsabstand erfolgt dadurch, dass auf ein manuelles oder automatisches Auslösesignal hin die Steuereinrichtung 26 Steuerbefehle den Antriebsvorrichtungen an oder in den Führungen 15, 16 zuführt, durch die synchron die Lichtschranke 20 in einer ersten Bewegung gegen das Oberwerkzeug 10 bewegt wird. Diese erste Bewegung erfolgt so lange, bis der Laserstrahl 23 durch das Oberwerkzeug 10 unterbrochen wird. In dieser Position stoppt der Justierantrieb automatisch, schaltet seine Antriebsrichtung um und bewegt dann die Lichtschranke 20 in einer zweiten, entgegengesetzten Bewegungsrichtung wieder vom Oberwerkzeug 10 weg. Der einzustellende Sicherheitsabstand ist dabei als Einstellwert in der Steuereinrichtung 26 gespeichert. In Abhängigkeit dieses Einstellwerts werden entsprechende Steuersignale dem Justierantrieb zugeleitet, so dass die Lichtschranke 20 eine Abstandsstrecke vom Oberwerkzeug 10 weggeführt wird, die diesem Einstellwert entspricht. Zur Umsetzung dieses Einstellwerts in eine Bewegung kann der Justierantrieb entweder zeitgesteuert betätigt werden, oder er enthält eine Wegmesseinrichtung, so dass die dem Einstellwert entsprechende Position eingeregelt werden kann. Die Justierung des Sicherheitsabstands beginnt entweder mit der Richtungsumkehr des Justierantriebs oder zu dem Zeitpunkt, zu dem die Unterbrechung des Laserstrahls 23 wieder aufgehoben ist.

Der beschriebene Justiervorgang für den Sicherheitsabstand kann vollautomatisch erfolgen oder aber auch in einer einfacheren Ausführung manuell gesteuert durch entsprechende elektrische Steuerbefehle an den Justierantrieb.

Zur Erhöhung der Sicherheit können an den Führungen 15, 16 nicht dargestellte rasterartige elektrische Steuerkontakte oder sonstige drahtlose Steuerelemente vorgesehen sein, die in Abhängigkeit der sich bewegenden Halterungen 17, 18 betätigt bzw. aktiviert werden. Am Ende des Justiervorgangs muss mindestens ein bestimmter vorgesehener Kontakt betätigt sein oder betätigt worden sein, um die schnelle Schließbewegung des Oberwerkzeugs 10 in Richtung des Unterwerkzeugs 11 wieder zu aktivieren. Hierdurch wird verhindert, dass durch eine mögliche Fehlfunktion beim Justiervorgang ein deutlich zu geringer Sicherheitsabstand eingestellt wird.

Die Größe des Sicherheitsabstands hängt im Wesentlichen vom Nachlaufweg bzw. Bremsweg des Oberwerkzeugs 10 nach einem Stoppbefehl ab. Dieser Abhängigkeit kann durch eine automatische Verknüpfung des gespeicherten Einstellwerts mit dem gemessenen Nachlaufweg Rechnung getragen werden. Hierzu ist eine Nachlaufweg-Messeinrichtung erforderlich, die entweder manuell oder automatisch in Abhängigkeit bestimmter Parameter, wie Zeit, Spannungsreset oder dergleichen, gestartet wird.

Durch das Messmodul 27 kann die jeweilige Position bzw. der Weg des Oberwerkzeugs 10 der Steuereinrichtung 26 übermittelt werden. Während einer Arbeitsbewegung des Oberwerkzeugs 10 in der Abwärtsrichtung wird zur Nachlaufwegmessung von der Steuereinrichtung 26 ein Stoppbefehl an die nicht dargestellte Antriebsvorrichtung für das Oberwerkzeug 10 bzw. das obere Maschinenteil 8 gegeben. Zum Zeitpunkt des Stoppbefehls wird durch das Messmodul 27 ein erstes Positionssignal erfasst und zum Zeitpunkt des tatsächlichen Stillstands des Oberwerkzeugs 10 ein zweites Positionssignal. Durch Differenzbildung der beiden Signale wird der Nachlaufweg bestimmt. In Abhängigkeit dieses Nachlaufwegs wird nun der Einstellwert gebildet und im Messwertspeicher der Steuereinrichtung 26 zur Vorgabe des Sicherheitsabstands gespeichert. Der Sicherheitsabstand muss dabei mindestens dem Nachlaufweg entsprechen, sollte jedoch zumindest geringfügig größer sein. Im einfachsten Falle kann der Einstellwert durch Verknüpfung des Nachlaufwegs mit einem bestimmten Multiplikationsfaktor gebildet werden.

In einer weiteren Ausbildung der Erfindung wird der gespeicherte Einstellwert in Abhängigkeit des Nachlaufwegs zyklisch oder bei bestimmten Ereignissen überprüft. Der Messwertspeicher ist als nichtflüchtiger Speicher ausgebildet, so dass der Einstellwert auch bei einer Spannungsunterbrechung erhalten bleibt. Wird nun bei einer erneuten Nachlaufwegmessung durch Vergleich festgestellt, dass der neue Nachlaufweg vom früher ermittelten deutlich abweicht, beispielsweise größer ist, so wird in Abhängigkeit des neu ermittelten Nachlaufwegs ein neuer Einstellwert in der entsprechenden Weise bestimmt, der den bisher gespeicherten Einstellwert ersetzt. Die Schließbewegung des Oberwerkzeugs 10 oder überhaupt die Arbeitsbewegung der Maschine wird dann so lange blockiert, bis automatisch ein neuer Justiervorgang stattgefunden hat, der entsprechend dem neuen Einstellwert einen neuen Sicherheitsabstand einstellt.

Damit eine Unterbrechung des Laserstrahls 23 durch das zu bearbeitende Werkstück selbst, beispielsweise durch das Blech 14, nicht zur Abschaltung der Bewegung des Oberwerkzeugs 10 führt, was sicherlich unerwünscht wäre, ist in nicht dargestellter Weise eine Abschalteinrichtung vorgesehen, durch die die Wirkung der Lichtschranken 20 - 22 abgeschaltet wird, wenn ein bestimmter Abstand zum zu bearbeitenden Werkstück oder zum Unterwerkzeug 11 erreicht ist, der im Wesentlichen dem Sicherheitsabstand entspricht. Diese Abschalteinrichtung kann beispielsweise durch einen Positionssensor, ein Abstandsmesselement oder dergleichen gesteuert werden.

In Fig. 2 ist der Fall dargestellt, dass ein Finger 25 einer im übrigen nicht dargestellten Bedienungsperson seitlich über das Unterwerkzeug 11 in die Rinne 13 eingreift, während das zu bearbeitende Blech 14 an dieser Stelle zurückgezogen ist oder eine Öffnung besitzt. In diesem Falle würde eine einzige Lichtschranke, beispielsweise die Lichtschranke 20, im Bereich der Bearbeitungskante des Oberwerkzeugs 10 eine Verletzung nicht verhindern können. Aus diesem Grunde sind im Ausführungsbeispiel mehrere Lichtschranken 20 - 22 nebeneinander in einer Ebene vorgesehen.

Die beschriebene Schutzeinrichtung ist selbstverständlich nicht auf Abkantpressen und Schneidemaschinen beschränkt, sondern kann überall dort eingesetzt werden, wo zwei Maschinenteile Arbeitsbewegungen gegeneinander ausführen, so dass dazwischen sich befindliche Körperteile verletzt werden können. Darüber hinaus wird selbstverständlich auch ein Schutz der Maschine oder der Maschinenteile durch die Sicherheitsabschaltung erreicht, wenn andere Gegenstände in die Bewegungsbahn gelangen, die diese Maschinenteile oder Werkzeuge beschädigen könnten.

Die erfindungsgemäße Schutzeinrichtung kann beispielsweise auch für Stanzmaschinen, sich schließende Türen oder Klappen oder Schieber, Hobelmaschinen oder dergleichen eingesetzt werden.

## Patentansprüche

1. Schutzeinrichtung für Maschinen, wie Abkantpressen, Schneidemaschinen, Stanzmaschinen oder dergleichen, bei denen ein erstes Maschinenteil Arbeitsbewegungen gegen ein zweites Maschinenteil ausführt, mit wenigstens einer Lichtschranke (20-22), insbesondere Laser-Lichtschranke, deren Lichtstrahl (23) im Einbauzustand senkrecht zur Arbeitsbewegungsrichtung (A) verläuft und die zwischen den beiden Maschinenteilen (8, 9) an einem derselben (8, 10) so positionierbar ist, dass ihr Lichtstrahl (23) einen Sicherheitsabstand zu diesem Maschinenteil (8, 10) aufweist, wobei dieser Sicherheitsabstand durch eine verstellbar an diesem einen Maschinenteil angeordnete Sicherheitseinrichtung (15-18, 20) einstellbar ist, die die wenigstens eine Lichtschranke (20-22) trägt, mit einer bei Unterbrechung des Lichtstrahls (23) die Arbeitsbewegung stoppenden Blockiereinrichtung und mit einer die Blockiereinrichtung unmittelbar vor Unterbrechung des Lichtstrahls (23) durch das andere Maschinenteil (9) abschaltenden Abschalteinrichtung, **dadurch gekennzeichnet, dass** Mittel zur Durchführung einer ersten Bewegung der Sicherheitseinrichtung (15- 18, 20) bis zur Unterbrechung des Lichtstrahls (23) durch das die Sicherheitseinrichtung tragende Maschinenteil (8, 10) sowie zur Durchführung einer zweiten Bewegung der Sicherheitseinrichtung (15 -18, 20) in die entgegengesetzte Richtung vorgesehen sind, wobei die den Sicherheitsabstand vorgebende Wegstrecke der zweiten Bewegung durch eine elektrische Mess- und/oder Steuereinrichtung (16) vorgebbar ist.

2. Schutzeinrichtung nach Anspruch 1, **dadurch gekennzeichnet, dass** die Steuereinrichtung (26) einen Messwertspeicher oder Einstellwertspeicher zur Speicherung der den Sicherheitsabstand vorgebenden Wegstrecke aufweist.

3. Schutzeinrichtung nach Anspruch 2, **dadurch gekennzeichnet, dass** Mittel zur automatischen Erfassung des Nachlaufwegs des sich bewegenden Maschinenteils (8, 10) nach einem Stoppsignal vorgesehen sind, und dass ein in Abhängigkeit dieses Nachlaufwegs stehender Wert den Sicherheitsabstand im Messwertspeicher vorgibt.

4. Schutzeinrichtung nach Anspruch 3, **dadurch gekennzeichnet, dass** eine Vergleichseinrichtung zum Vergleich des gespeicherten Nachlaufwegs mit einem neu erfassten Nachlaufweg vorgesehen ist, und dass Mittel zur erneuten automatischen Einstellung des Sicherheitsabstands in Abhängigkeit des neuen Nachlaufwegs vorgesehen sind, wenn eine vorgebbare Abweichung zwischen früherem und neuem Nachlaufweg festgestellt wird.

5. Schutzeinrichtung nach Anspruch 3 oder 4, **dadurch gekennzeichnet, dass** die Mittel zur automatischen Erfassung des Nachlaufwegs während der ersten Schließbewegung der Maschinenteile (8, 10) nach einer Spannungsunterbrechung oder nach einer vorgebbaren Zahl von Zyklen ausgebildet sind.

6. Schutzeinrichtung nach einem der vorhergehenden Ansprüche, **dadurch gekennzeichnet, dass** mehrere elektrische Steuerkontakte oder drahtlose Steuerelemente vorgesehen sind, die mit der sich bewegenden Sicherheitseinrichtung (15 - 18, 20) in Wirkverbindung stehen, wobei Mittel zur Blockierung der Schließbewegung der Maschinenteile (8, 10) vor Erreichen eines vorgewählten Steuerkontakts oder Steuerelements vorgesehen sind.

7. Schutzeinrichtung nach einem der vorhergehenden Ansprüche, **dadurch gekennzeichnet, dass** eine motorische Antriebsvorrichtung zur jeweils manuell ausgelösten oder vollautomatischen Durchführung der Bewegungen der Sicherheitseinrichtung (15 - 18, 20) vorgesehen ist.

8. Schutzeinrichtung nach einem der vorhergehenden Ansprüche, **dadurch gekennzeichnet, dass** die elektrische Mess- und/oder Steuereinrichtung (16) Mittel zur Auslösung der Wegstreckeneinstellung während der zweiten Bewegung erst bei Aufhebung der Unterbrechung des Lichtstrahls (23) aufweist.

9. Schutzeinrichtung nach einem der vorhergehenden Ansprüche, **dadurch gekennzeichnet, dass** wenigstens zwei Lichtschranken in zwei in der Arbeitsbewegungsrichtung hintereinander angeordneten Ebenen positioniert sind, wobei die zur Einstellung des Sicherheitsabstandes vorgesehene Lichtschranke (20) in der am nächsten zum sie tragenden Maschinenteil (8, 10) liegenden Ebene angeordnet ist.

## Claims

1. Guard device for machines, such as press brakes, cutting machines, punching machines and the like, wherein a first machine part executes working movements against a second machine part, comprising at least one light barrier (20 to 22), in particular a laser light barrier, of which the light beam (23) extends perpendicular to the working movement direction (A) in the fitted state and which can be positioned between the two machine parts (8, 9) on one of the machine parts (8, 10) in such a way that its light beam (23) has a safety gap from this machine part (8, 10), wherein this safety gap can be set by a safety device (15 to 18, 20) that is adjustably arranged on this one machine part, the device carrying at least one light barrier (20 to 22), comprising a blocking device that stops the working movement when the light beam (23) is broken and comprising a switching-off device that switches off the blocking device immediately before the light beam (23) is broken by the other machine part (9), **characterised in that** the means are provided for carrying out a first movement of the safety device (15 to 18, 20) through to interruption of the light beam (23) by the machine part (8, 10) carrying the safety device and for carrying out a second movement of the safety device (15 to 18, 20) in the opposite direction, wherein the distance of the second movement predetermining the safety gap can be predetermined by an electrical measuring and/or control device (16).

2. Guard device according to claim 1, **characterised in that** the control device (26) comprises a measured value memory or a setting memory for storing the distance predetermining the safety gap.

3. Guard device according to claim 2, **characterised in that** means are provided for automatically detecting the slowing-down path of the moving machine part (8, 10) after a stop signal, and **in that** a value dependent on this slowing-down path predetermines the safety gap in the measured value memory.

4. Guard device according to claim 3, **characterised in that** a comparator is provided for comparing the stored slowing-down path with a newly detected slowing-down path, and **in that** means are provided for renewed automatic setting of the safety gap as a function of the new slowing-down path if a predeterminable difference is established between the earlier and the new slowing-down paths.

5. Guard device according to either claim 3 or claim 4, **characterised in that** the means are formed for automatically detecting the slowing-down path during the first closing movement of the machine parts (8, 10) after a voltage cut-off or after a predeterminable number of cycles.

6. Guard device according to any one of the preceding claims, **characterised in that** a plurality of electrical control contacts or wireless control elements are provided which cooperate with the moving safety device (15 to 18, 20), wherein means are provided for blocking the closing movement of the machine parts (8, 10) before reaching a preselected control contact or control element.

7. Guard device according to any one of the preceding claims, **characterised in that** a motor drive device is provided for respective manually triggered or completely automatic execution of the movements of the safety device (15 to 18, 20).

8. Guard device according to any one of the preceding claims, **characterised in that** the electrical measuring and/or control device (16) comprises means for triggering the distance setting during the second movement only on cancellation of the interruption to the light beam (23).

9. Guard device according to any one of the preceding claims, **characterised in that** at least two light barriers are positioned in two planes arranged behind each other in the working movement direction, the light barrier (20) provided for setting the safety gap being arranged in the plane located closest to the machine part (8, 10) carrying it.

## Revendications

1. Dispositif de protection pour machines, telles que des presses plieuses, des cisailles, des machines de découpe ou machines similaires, dans lesquelles une première partie de la machine effectue des mouvements de travail en direction d'une deuxième partie de la machine, comportant au moins une barrière lumineuse (20-22), en particulier une barrière lumineuse à laser, dont le faisceau de lumière (23), à l'état monté, est perpendiculaire à la direction du mouvement de travail (A) et qui peut être positionnée entre les deux parties (8, 9) de la machine, sur l'une des parties de la machine (8, 10), de telle sorte que son faisceau de lumière (23) est situé à une distance de sécurité de cette partie de la machine (8, 10), ladite distance de sécurité pouvant être réglée par un dispositif de sécurité (15-18, 20), qui est agencé de manière réglable sur cette partie de la machine et qui porte ladite au moins une barrière lumineuse (20-22), comportant un dispositif de blocage stoppant le mouvement de travail lorsque la barrière lumineuse (20-22) est interceptée et comportant un dispositif de déconnexion déconnectant le dispositif de blocage immédiatement avant que le faisceau de lumière ne soit intercepté par l'autre partie de la machine (9), **caractérisé en ce qu'**il est prévu des moyens pour effectuer un premier mouvement du dispositif de sécurité (1 5-18, 20) jusqu'à ce que le faisceau de lumière (23) soit intercepté par la partie de la machine (8, 10) portant le dispositif de sécurité, ainsi que pour effectuer un deuxième mouvement du dispositif de sécurité (15-18, 20) dans la direction opposée, la trajectoire du deuxième mouvement, définissant la distance de sécurité, pouvant être prédéfinie par un dispositif électrique de mesure et/ou commande (16).

2. Dispositif de protection selon la revendication 1, **caractérisé en ce que** le dispositif de commande (26) comporte une mémoire de valeurs de mesure ou une mémoire de valeurs de réglage en vue d'y stocker la trajectoire définissant la distance de sécurité.

3. Dispositif de protection selon la revendication 2, **caractérisé en ce qu'**il est prévu des moyens pour détecter automatiquement la distance de ralentissement de la partie mobile (8, 10) de la machine après un signal d'arrêt, et **en ce qu'**une valeur, qui est fonction de cette distance de ralentissement, fixe la distance de sécurité dans la mémoire des valeurs de mesure.

4. Dispositif de protection selon la revendication 3, **caractérisé en ce qu'**il est prévu un dispositif de comparaison pour comparer la distance de ralentissement stockée en mémoire avec une nouvelle distance de ralentissement détectée, et ce qu'il est prévu des moyens pour un nouveau réglage automatique de la distance de sécurité en fonction de la nouvelle distance de ralentissement lorsqu'un écart prédéfinissable est constaté entre l'ancienne et la nouvelle distance de ralentissement.

5. Dispositif de protection selon la revendication 3 ou 4, **caractérisé en ce que** les moyens sont conçus pour détecter automatiquement la distance de ralentissement pendant le premier mouvement de fermeture des parties de la machine (8, 10) après une interruption de tension ou après un nombre donné de cycles.

6. Dispositif de protection selon l'une quelconque des revendications précédentes, **caractérisé en ce qu'**il est prévu plusieurs contacts de commande électriques ou éléments de commande sans fil, qui sont en liaison active avec le dispositif de sécurité (15-18, 20) mobile, des moyens étant prévus pour stopper le mouvement de fermeture des parties de la machine (8, 10) avant qu'un contact de commande ou élément de commande présélectionné soit atteint.

7. Dispositif de protection selon l'une quelconque des revendications précédentes, **caractérisé en ce qu'**il est prévu un dispositif d'entraînement motorisé pour effectuer, après activation manuelle ou tout automatiquement, les mouvements du dispositif de sécurité (15-18, 20).

8. Dispositif de protection selon l'une quelconque des revendications précédentes, **caractérisé en ce que** le dispositif électrique de mesure et/ou commande (16) comporte des moyens pour activer le réglage de la trajectoire pendant le deuxième mouvement uniquement lorsque le faisceau de lumière (23) n'est plus intercepté.

9. Dispositif de protection selon l'une quelconque des revendications précédentes, **caractérisé en ce qu'**au moins deux barrières lumineuses sont positionnées dans deux plans disposés l'un derrière l'autre dans la direction de travail, la barrière lumineuse (20) prévue pour le réglage de la distance de sécurité étant agencée dans le plan le plus proche de la partie de la machine (8, 10) portant ladite barrière lumineuse.
